# EUROPEAN PATENT SPECIFICATION

(11) **EP 3 530 983 B1**
(45) Date of publication and mention of the grant of the patent: **08.04.2020**
(21) Application number: 18158986.2
(22) Date of filing: 27.02.2018
(51) Int. Cl.: F16H 37/04

(54) **A MOTOR VEHICLE GEARBOX WITH A RANGE SELECTOR DEVICE**
KRAFTFAHRZEUGGETRIEBE MIT EINER BEREICHSWAHLVORRICHTUNG
BOÎTE DE VITESSES DE VÉHICULE À MOTEUR AVEC DISPOSITIF SÉLECTEUR DE PLAGES

(43) Date of publication of application: 28.08.2019
(73) Proprietor: FCA Italy S.p.A., 10135 Torino (IT)
(72) Inventor: CONSANI, Mr. Marco, I-10135 Torino (IT); PREGNOLATO, Mr. Gianluigi, I-10135 Torino (IT)
(74) Representative: De Bonis, Paolo

(56) References cited:
- DE-A1-102016 211 519
- DE-C- 965 377
- FR-A1- 2 613 015

## Description

### Field of the invention

The present invention relates to gearboxes for motor vehicles.

### Prior art and general technical problem

The solutions currently adopted in the design of a motor-vehicle transmission envisage - to a variable extent but, however, in a concordant way - providing a first gear ratio sufficiently short as to enable the vehicle to pull off easily even in conditions of heavy load (for example, on a steep slope and/or with the vehicle heavily loaded).

However, there is a limit for the transmission ratio of the first gear that cannot be exceeded for constructional reasons and/or for reasons linked to driveability of the vehicle. In fact, the adoption of an excessively short first gear ratio results in an excessively marked step in speed with respect to the second gear ratio as a result of the fact that the second gear ratio - and along with it, the subsequent ratios - cannot in any case be excessively short (i.e., with marked gear reductions). This has a negative impact on the driveability of the vehicle, since the driver, after passage from the first gear to the second gear, finds himself instantaneously with the engine in operating conditions (as regards load and r.p.m.) that are not optimal, or at least not comparable with the ones that correspond to the first gear when pulling off.

On the other hand, the ever-increasing need for containment of fuel consumption calls for the adoption of sufficiently long forward gear ratios, in such a way as to lower the engine speed given the same travelling and/or cruising speed. This is clearly impracticable for the first gear ratio, because otherwise there would be modest levels of performance when pulling off. This means that in any case the first gear ratio limits the benefit that can be achieved as regards fuel consumption, since the compromise solution that derives from the current constraints results in a ratio that is in any case too short in the perspective of a reduction of consumption levels, and still too long for the most problematical starting manoeuvres, especially for vehicles for off-road use.

FR2613015 discloses a gearbox with an odd number of forward gears with an additional gear ratio, where the additional gear ratio is obtained by connecting an epicyclic gear train to the pinion of the primary shaft that, by using fastening means, makes possible to lock the epicyclic gear train so as to have the immediately lower gear ratio.

### Object of the invention

The object of the present invention is to solve the technical problems mentioned previously.

In particular, the object of the invention is to reconcile the requirements of starting in burdensome conditions with the requirements of reduction of consumption levels.

### Summary of the invention

The object of the present invention is achieved by a motor-vehicle gearbox having the features of the independent claim 1.

In particular, the object of the invention is achieved by a motor-vehicle gearbox comprising a plurality of gearings that define corresponding forward gear ratios and a reverse gear ratio,
each gearing comprising a first gear wheel carried by a primary shaft of the gearbox and a second gear wheel, coupled to said first gear wheel, carried by a secondary shaft of the gearbox,
the primary shaft being rotatable about a first axis of rotation, and the secondary shaft being rotatable about a second axis of rotation, parallel to the first axis of rotation,
wherein, in at least one gearing of said plurality of gearings:
the first gear wheel is permanently connected in rotation to the primary shaft; and
the second gear wheel is mounted freely rotatable with respect to the secondary shaft, said second gear wheel being connected in rotation to an epicyclic unit coaxial to the secondary shaft, said epicyclic unit being moreover operatively connected to a range-selector device,
said epicyclic unit comprising:
   - a sun gear, coaxial to the second gear wheel of the gearing;
   - a ring gear, coaxial to the second gear wheel of the gearing and connected in rotation thereto; and
   - a planetary unit, coaxial to the second gear wheel of the gearing including one or more planetary gears carried by a planet carrier,
wherein the range-selector device includes a first operating condition in which said sun gear is connected in rotation to said ring gear, and a second operating condition in which rotation of said sun gear is blocked, and
wherein the gearing is moreover operatively associated to an engagement device configured for connecting selectively in rotation said planet carrier to the secondary shaft.

### Brief description of the drawings

The invention will now be described with reference to the annexed drawings, which are provided purely by way of non-limiting example and in which:
- Figure 1 is a schematic view of a motor-vehicle gearbox according to the invention; and
- Figure 2 is a cross-sectional view of some components of the gearbox according to the invention.

### Detailed description

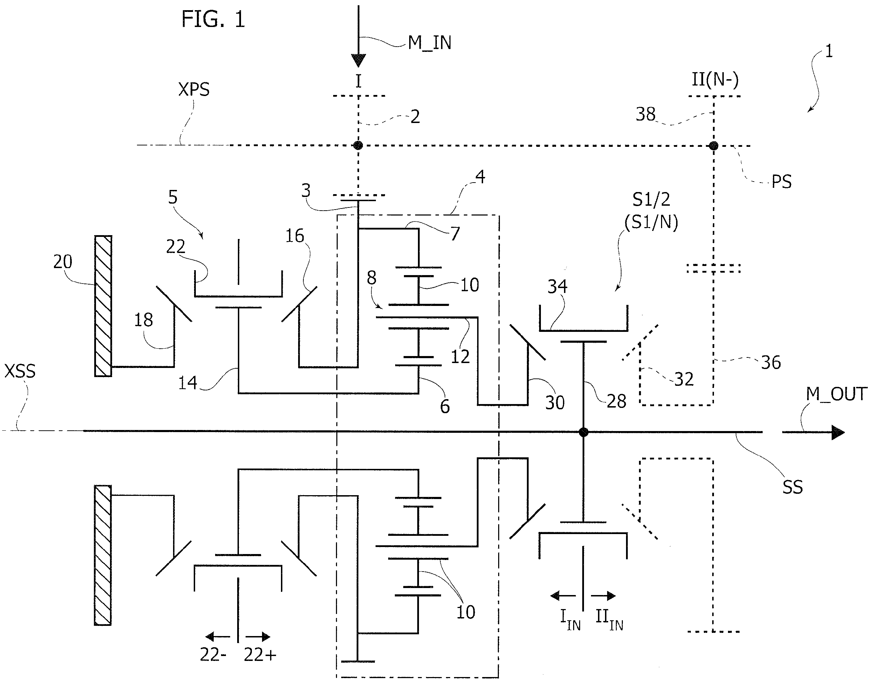

In Figure 1 the reference number 1 designates as a whole a motor-vehicle gearbox according to the invention. In detail, described primarily herein is a portion of the gearbox 1 corresponding to a gearing that defines the first gear ratio, in so far as in the preferred embodiment the rest of the gearbox (except, possibly, for the reverse gear) is provided in a conventional way.

The gearbox 1 comprises a plurality of gearings that define corresponding forward gear ratios and a reverse gear ratio. In the view of Figure 1, the first forward gear ratio (I) and the second forward gear ratio (II) are exemplified, but in general the gearbox 1 may present five or six forward gear ratios and a reverse gear ratio.

Each of the gearings comprises a first gear wheel carried by a primary shaft PS of the gearbox and a second gear wheel coupled (by direct meshing, as is typically the case of the forward gear ratio, or via an idle gear as is the case of the reverse gear ratio) to the first gear wheel, where the second gear wheel is carried by a secondary shaft SS of the gearbox.

The primary shaft PS is rotatable about a first axis of rotation XPS, whereas the secondary shaft of the gearbox is rotatable about a second axis of rotation XSS, parallel to the axis XPS. With reference to the gearing that defines the first gear ratio I illustrated in the schematic view of Figure 1 - provided according to the invention - this comprises a first gear wheel 2 permanently connected to the primary shaft PS and rotatable about the axis XPS, and a second gear wheel 3 coupled to the gear wheel 2 by direct meshing. The gear wheel 3 is mounted on the secondary shaft SS freely rotatable (idle) with respect thereto.

The gear wheel 3 is connected in rotation to an epicyclic unit 4 coaxial to the secondary shaft SS, and the epicyclic unit 4 is in turn operatively connected to a range-selector device 5.

The epicyclic unit 4 comprises a sun gear 6 coaxial to the secondary shaft SS and a ring gear 7, which is likewise coaxial to the secondary shaft SS and is connected in rotation to the second gear wheel 3, being preferably provided integral therewith or else carrying the gear wheel 3 interference fitted thereon.

A planetary unit 8 meshes with the sun gear 6 and the ring gear 7, and comprises one or more - preferably a plurality of - planetary gears 10, which are driven in rotation about the axis XSS by a planet carrier 12. Each planetary gear 10 is moreover rotatable about a respective axis of rotation X10.

The sun gear 6, the ring gear 7, and the one or more planetary gears 10 are cylindrical gear wheels. In particular, the sun gear 6 is a cylindrical gear wheel with external teeth, the ring gear 7 is a cylindrical gear wheel with internal teeth, and the one or more planetary gears 10 are cylindrical gear wheels with external teeth.

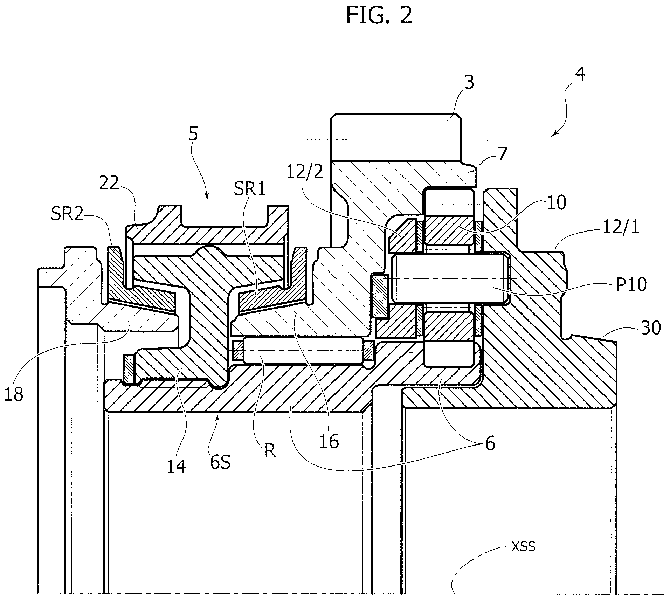

As visible in the cross section of Figure 2, the sun gear 6 is basically provided at the end of a sleeve element 6S on which the ring gear 7 is rotatably supported (for example, by interposition of a roller bearing R) with the gear wheel 3 fixed thereto.

The planet carrier 12 is, instead, provided by axial assembly of a sleeve element 12/1 and a ring 12/2, which support one or more pins P10 mounted idle on which are the respective planetary gears 10.

The range-selector device 5 comprises a first element 14, a second element 16, a third element 18, and a mobile element 22, which, according to the embodiments, may coincide with the first element 14.

In the embodiment illustrated herein, visible in a practical implementation in Figure 2, the range-selector device 5 may be provided as synchronizer with conical elements.

The first element 14 of the range-selector device 5 may be a hub of the synchronizer including an external peripheral toothing. The second element 16 of the range-selector device 5 may be a first synchronization cone and, in the light of what has been described, is connected in rotation to the ring gear 7, preferably provided in a way integral therewith.

The third element 18 of the range-selector device 5 may be a second synchronization cone (fixed in rotation) provided as a collar connected to a component 20 fixed in rotation and in axial translation (for example the casing of the gearbox 1).

A first (conical) synchronizer ring SR1 may be moreover arranged between the hub 14 and the first synchronization cone 16, and a second synchronizer ring SR2 may be arranged between the hub 14 and the second synchronization cone 18.

The mobile element 22 may be a sleeve connected in rotation to the hub 14 by means of an internal grooved profile that engages an external grooved profile of the hub 14, and is axially movable relative to the hub 14 in the directions 22+ and 22- visible in Figure 1.

In an alternative embodiment, the range-selector device 5 may be provided as an engagement device with front teeth (of the so-called dog-clutch type) where the elements 16, 18 are provided as collars with a ring of front teeth (arranged aligned in directions parallel to the axis XSS), whereas the element 14 also functions as mobile element. In particular, in a way per se known, the element 14 may be provided as a sleeve member, which is connected in rotation to the sun gear 6 (but axially mobile along the body thereof) and bears on the periphery a profile that can be coupled with an actuator element (typically, a groove that can be coupled with an actuation fork), whereas on opposite faces in an axial direction two contrate toothings are provided configured for engaging, respectively, the contrate toothings of the elements 16 and 18 upon movement of the element 14 towards the corresponding elements 16, 18.

As in the case of a device 5 provided as synchronizer, the third element 18 may be connected to a component 20 fixed in rotation and in axial translation (for example, the casing of the gearbox 1).

At the opposite end, the planet carrier 12 cooperates with an engagement device S1/2 that controls engagement of the first and second forward gears. The planet carrier 12 is, according to the invention, selectively connected in rotation to the secondary shaft SS by means of the engagement device S1/2. In particular, the engagement device S1/2 is preferably provided as a synchronizer with conical elements altogether similar to the range-selector device 5.

The engagement device S1/2 may comprise a first element 28, a second element 30, a third element 32, and a moving element 34.

The first element 28 of the engagement device S1/2 may be a hub of the synchronizer including an external peripheral toothing. The second element 30 of the engagement device S1/2 may be a first synchronization cone and is permanently connected in rotation to the planet carrier 12 (in the embodiment of Figure 2 it is integral with the sleeve 12/1).

The third element 32 of the range-selector device 5 may be a second synchronization cone permanently connected in rotation to (preferably provided integrally with) a gear wheel 36 mounted idle on the secondary shaft SS. The gear wheel 36 meshes with a gear wheel 38 permanently connected to the primary shaft PS so as to define the gearing of the second forward gear ratio II.

A first (conical) synchronizer ring may be moreover arranged between the hub 28 and the first synchronization cone 30, and a second (conical) synchronizer ring is arranged between the hub 28 and the second synchronization cone 32.

The mobile element 34 may be a sleeve connected in rotation to the hub 28 by means of an internal grooved profile that engages an external grooved profile of the hub 28, and is axially movable relative to the hub 28 in the directions I IN and II_IN visible in Figure 1, which are associated, respectively, to engagement of the gearing for the first gear I and to engagement of the gearing for the second gear II.

Operation of the gearbox 1 and in particular of the gearing for the first gear I associated to the range selector 5 will now be described.

The range-selector device 5 comprises a first operating condition in which a connection in rotation of the first sun gear 6 to the ring gear 7 is provided, and a second operating condition in which rotation of the first sun gear 6 is blocked. The first operating condition can be obtained by displacing the moving element 22 in the direction indicated by the arrow 22+ in Figure 1 (which corresponds to a first operating position of the moving element), consequently coupling together the elements 14 and 16 of the range-selector device 5.

In this way, an effect of de-activation of the epicyclic unit 2 is obtained, in so far as the sun gear 6 is rigidly connected in rotation to the ring gear 7, and the relative movement between the planetary unit 8 and the gears 6 and 7 is hence inhibited. In this condition, the gearing for the first gear I operates in a way altogether similar to a conventional gearing, i.e., with a "monolithic" second gear wheel 3.

In other words, the hub of the gear wheel 3 - constituted by the epicyclic unit 4 - is rendered one piece with the gear wheel 3 itself. This means that no difference of angular velocity between the gear wheel 3 and the hub concerned exists, and likewise that the angular velocity of the gear wheel 3 and of the blocked epicyclic unit 4 is the same as that of the elements 14, 16, and of the planet carrier 12 and the element 30.

The first forward gear ratio I is normally selected by displacing the moving element 34 of the device S1/2 in the direction I IN and thus rendering the element 30 and the element 28 of the device S1/2 connected in rotation, hence connecting in rotation the planet carrier 12 to the secondary shaft SS. In this condition, as a result of de-activation of the epicyclic unit 4, transmission of motion occurs as if the epicyclic unit 4 did not form part of the gearbox 1.

Displacement of the moving element 34 in the direction I_IN connects in rotation the secondary shaft SS to the element 30, actually rigidly connecting in rotation the gear wheel 3 to the shaft SS as it would occur in a conventional gearbox. Transmission of motion from the primary shaft PS of the gearbox 1 (M_IN) to the secondary shaft SS of the gearbox 1 (M_OUT) occurs only via the transmission ratio existing between the gear wheel 3 and the gear wheel 2 (which can be defined as the ratio between the angular velocity of the gear wheel 3 and the angular velocity of the gear wheel 2).

In this condition of the range-selector device 5, there hence exists a unit transmission ratio between the gear wheel 3 and the first element 14 of the range-selector device 5 and there likewise exists a unit transmission ratio between the gear wheel 3 and the synchronization cone/second element 30 of the device S1/2, exactly as occurs in an idle gear of a gearing of a conventional gearbox.

In the second operating condition of the range-selector device 5, which can be obtained by means of displacement of the moving element 22 in the direction 22-, the sun gear 6 is permanently connected to the fixed component 20 and rotation thereof is consequently blocked.

This is equivalent to a (re)activation of the epicyclic unit 4 since a relative movement between the planetary unit 8 and the gears 6, 7 is allowed.

This means that, upon selection of the first forward gear I by means of the device S1/2, transmission of motion from the primary shaft PS (M_IN) to the secondary shaft SS (M_OUT) occurs via combination of the nominal transmission ratio of the gearing for the first gear (angular velocity of gear wheel 3/angular velocity of gear wheel 2) and of the transmission ratio of the epicyclic unit 4, thus introducing a further reduction stage in addition to that already introduced by the meshing between the gear wheel 2 and the gear wheel 3.

In other words, in addition to the speed step that is created upon meshing of the gear wheels 2 and 3, a further speed step occurs within the hub of the gear wheel 3 itself, with the consequence that the planet carrier 12 - which is the element operatively connected to the device S1/2 - rotates about the axis XSS at an angular velocity lower than the angular velocity of the gear wheel 3.

This means that in the second operating condition of the range-selector device 5 a low range of speed of rotation is actually selected, with multiplication of torque at the output from the secondary shaft SS.

What applies to the gearing for the first gear ratio I may be applied in an identical way to the gearing for the reverse gear in the case where it is of the synchronized type, not illustrated but per se known. In this case, meshing between the first and second gear wheels of the gearing occurs not directly, but via a third (idle) gear wheel, which is rotatable about a third axis of rotation parallel to the axes XPS and XSS and with which both the first gear wheel and the second gear wheel mesh.

The second gear wheel of the reverse gearing is hence provided as an idle gear wheel similar to the gear wheel 3 that can be selectively connected in rotation to the secondary shaft SS via an epicyclic unit similar or identical to the epicyclic unit 4 (with the same modalities of connection between the gear wheels). The output shaft of the epicyclic unit associated to the reverse gear ratio corresponds once again to a planet carrier of the unit, and constitutes the operative interface with the reverse synchronizer (which is once again constituted by an engagement device altogether similar to the device S1/2). A range-selector device similar or identical to the device 5 would hence enable use of the reverse gear in low gear range or in high/cruise gear range.

Hence, in the limit, it is possible to have an embodiment of the gearbox 1 in which both the first forward gear and the reverse gear are provided with a second (idle) gear wheel operatively associated to an epicyclic unit like the epicyclic unit 4 and to a dedicated range-selector device.

It is of course possible to envisage only the first forward gear or only the reverse gear that are operatively associated to an epicyclic unit with corresponding range-selection device, but especially the embodiments where this measure is adopted only on the reverse gear are not to be considered preferred.

The dual speed range made available by the range selector 5 hence makes it possible to respond to the requirements of setting off in burdensome conditions without penalizing fuel consumption and CO₂ emissions.

Both of the operating conditions of the range-selection device 5 - and consequently of the gearbox 1 - can be selected by means of a manual control, which is located in the passenger compartment of the vehicle and can be operated by the driver, or else automatically by means of an electronic control unit.

Selection of the second operating condition (low range) is, however, subject to certain conditions outlined hereinafter. Preferably, the control strategy is configured in such a way that the non-observance of at least one of the conditions results in preclusion of the selection itself or else automatic passage to the first operating condition of the device 5 (cruise/high range).

The above conditions include:
i) selection of the first forward gear or of the reverse gear;
ii) vehicle speed lower than a threshold speed.

In particular the second condition is decisive: activation of the epicyclic unit 4 reduces further the transmission ratio between the engine and the wheels (understood as the ratio between the rotational velocity of the wheels and the engine r.p.m.; in a dual way, it can be said that activation of the epicyclic unit 4 will increase the reduction ratio - which is the inverse of the aforementioned ratio), with consequent risk of serious damage to the engine and to the transmission in the case where the vehicle speed were to exceed the threshold mentioned above. Preferably, the threshold can be set between 25 km/h and 45 km/h according to the features of the engine and transmission. A preferred threshold value corresponds to 35 km/h (approximately 22 mph).

Accessory conditions may moreover be envisaged, such as the fact that the vehicle is in pulling-off conditions, possibly combined with a slope threshold of applying to the terrain on which the vehicle is travelling.

Subject to the above conditions, in the case where the driver and/or the control unit do/does not select the second operating condition, the range-selector device 5 is constantly kept in the first operating condition, in such a way as to control the gearbox 1 as if it were without the epicyclic unit 4. The first operating condition is maintained as long as the vehicle is cruising - whatever the forward gear selected - to enable transmission of motion from the engine to the wheels of the vehicle. In general, in order for transmission of motion to be obtained, either one or the other operating condition of the device 5 must be selected. Otherwise (engagement device 5 in neutral position), input of the motion from the primary shaft PS - obviously assuming that the first gear or the reverse gear are selected and engaged - would cause only an idle rotation of the sun gear 6 (principally as a result of the friction internal to the system) with a transmission of torque to the planet carrier 12 that is negligible and ultimately is not sufficient to drive the secondary shaft SS and the wheels of the vehicle.

Thanks to the gearbox 1, it becomes possible to manage setting off in extremely burdensome conditions both in the case of forward setting off and in the case of starting in reverse. Once there is no longer the need to set off, it is possible to switch the gearbox 1 into a condition of normal operation, excluding the epicyclic unit 4, and hence enabling the engine of the vehicle to achieve targets of reduction of consumption that cannot be achieved by means of known gearboxes.

In fact, thanks to the de-activatable reduction stage provided by the epicyclic unit 4 it is possible to choose a longer ratio for all the forward gears of the gearbox of the vehicle, including the first gear and the reverse gear. In the event of burdensome starting conditions it is sufficient to activate the epicyclic unit 4, excluding it when the starting manoeuvre is completed. Basically, the epicyclic unit 4 decouples the choice of the nominal ratios of the gearings of the gearbox from the requirements linked to setting off, thus widening the margin of freedom that can be exploited for reducing consumption levels.

On the other hand, the response that the gearbox 1 affords to the requirements of start up is decidedly outside the range of gearboxes of a known type: thanks to the gearbox 1 according to the invention, it is possible to achieve a significant multiplication of the torque transmitted to the wheels without intervening massively on other components of the transmission or on the engine. It is in fact not to be forgotten that, in the low gear range, the torque already increased twice via meshing between the wheels and the epicyclic unit 4 is further increased by the speed step that takes place as a result of meshing of the output pinion of the secondary shaft on the ring gear of the differential.

Of course, the details of construction and the embodiments may vary widely with respect to what has been described and illustrated, without thereby departing from the scope of the present invention, as defined by the annexed claims.

## Claims

1. A motor-vehicle gearbox (1) comprising a plurality of gearings that define corresponding forward gear ratios (I, II) and a reverse gear ratio,
each gearing comprising a first gear wheel (2, 38) carried by a primary shaft (PS) of the gearbox (1) and a second gear wheel (3, 36), coupled to said first gear wheel, carried by a secondary shaft (SS) of the gearbox,
the primary shaft (PS) being rotatable about a first axis of rotation (XPS), and the secondary shaft (SS) being rotatable about a second axis of rotation (XSS), parallel to the first axis of rotation (XPS),
wherein in at least one gearing (I) of said plurality of gearings:
the first gear wheel (2) is permanently connected in rotation to the primary shaft (PS); and
the second gear wheel (3) is mounted freely rotatable with respect to the secondary shaft (SS), said second gear wheel (3) being connected in rotation to an epicyclic unit (4) coaxial to the secondary shaft (SS), said epicyclic unit (4) being moreover operatively connected to a range-selector device (5),
said epicyclic unit (4) comprising:
- a sun gear (6), which is coaxial to the second gear wheel (3) of the gearing (I);
- a ring gear (7), which is coaxial to the second gear wheel (3) of the gearing (I) and is connected in rotation thereto; and
- a planetary unit (8), which is coaxial to the second gear wheel (3) of the gearing (I) and includes one or more planetary gears (10) carried by a planet carrier (12);
wherein the range-selector device (5) includes a first operating condition (22+) in which said sun gear (6) is connected in rotation to said ring gear (7), and a second operating condition (22-) in which rotation of said sun gear (6) is blocked, and
wherein the gearing (I) is moreover operatively associated to an engagement device (S1/2) configured for connecting selectively in rotation said planet carrier (12) to the secondary shaft (SS).

2. The gearbox (1) according to Claim 1, wherein said gearing is a gearing for the first forward gear ratio (I), wherein the first gear wheel (2) and the second gear wheel (3) are coupled via direct meshing.

3. The gearbox (1) according to Claim 1 or Claim 2, wherein said gearing is a reverse gearing comprising a third gear wheel, which is rotatable about a third axis of rotation parallel to said first and second axes of rotation (XPS, XSS), wherein the first and second gear wheels are coupled via meshing with the third gear wheel.

4. The gearbox (1) according to any one of the preceding claims, wherein said range-selector device (5) comprises a first element (14), a second element (16), and a third element (18),
wherein:
- said sun gear (6) is connected in rotation to said first element (14) of the range-selector device (5) ;
- said ring gear (7) is connected in rotation to said second element (16) of the range-selector device (5); and moreover
- the third element (18) of the range-selector device (5) is connected to a component (20) fixed in rotation.

5. The gearbox (1) according to Claim 4, wherein the range-selector device (5) comprises a mobile element (22), which can be displaced between a first operating position (22+) in which a coupling is provided of said first element (14) and said second element (16), and a second operating position (22-) in which a coupling is provided of said first element (14) and said third element (18).

6. The gearbox (1) according to any one of the preceding claims, wherein:
- in the first operating condition of the range-selector device (5), the sun gear (6) and the ring gear (7) are connected in rotation to one another and the relative movement between said planetary unit (8) and said sun gear (6) and ring gear (7) is disabled; and
- in the second operating condition of the range-selector device (5), the relative movement between said planetary unit (8) and said sun gear and ring gear (6, 7) is enabled.

7. The gearbox (1) according to any one of the preceding claims, wherein the sun gear (6), the ring gear (7), and the one or more planetary gears (10) are cylindrical gear wheels.

8. The gearbox (1) according to Claim 7, wherein the sun gear (6) is a cylindrical gear wheel with external toothing, the ring gear (7) is a cylindrical gear wheel with internal toothing, and the one or more planetary gears (10) are cylindrical gear wheels with external toothing.

9. The gearbox (1) according to any one of Claims 4 to 8, wherein said range-selector device (5) is a synchronizer with conical elements in which:
- the first element (14) of the range-selector device (5) is a hub of said synchronizer;
- the second element (16) of the range-selector device (5) is a first synchronization cone connected to said ring gear (7);
- the third element (18) of the range-selector device (5) is a second synchronization cone fixed in rotation; and
- the moving element (22) is a sleeve connected in rotation to said hub (14) and axially mobile with respect thereto.

10. The gearbox (1) according to Claim 9, wherein a first synchronizer ring (SR1) is arranged between said hub (14) and said first synchronization cone (16), and wherein a second synchronizer ring (SR2) is arranged between said hub (14) and said second synchronization cone (18).

11. The gearbox (1) according to any one of Claims 4 to 8, wherein said range-selector device (5) is an engagement device with front teeth in which:
- the second element (16) and the third element (18) of the range-selector device (5) are provided as collars with a ring of front teeth; and
- the first element (14) of the range-selector device (5) is connected in rotation to said sun gear (6) and is axially movable with respect thereto, and further includes front teeth configured for engaging, respectively, the front teeth of the second element (16) and of the third element (18), said first element (14) moreover constituting the mobile element of the range-selector device (5).

12. The gearbox (1) according to Claim 1, wherein said engagement device (S1/2) is a synchronizer with conical elements, including:
- a first element (28) defining a hub of said synchronizer;
- a second element (30) defining a first synchronization cone connected in rotation to said planet carrier (12);
- a third element (36) defining a second synchronization cone connected in rotation to the second gear wheel (36) of a further forward gear ratio, in particular a second forward gear ratio (II); and
- a mobile element (34), comprising a sleeve member connected in rotation to said hub (28) and axially movable with respect thereto.

13. The gearbox (1) according to Claim 12, wherein a first synchronizer ring is arranged between said hub (28) and said first synchronization cone (30), and wherein a second synchronizer ring is arranged between said hub (28) and said second synchronization cone (32) .

## Patentansprüche

1. Kraftfahrzeuggetriebe (1), umfassend mehrere Verzahnungen, die entsprechende Vorwärtsübersetzungsverhältnisse (I, II) und einen Rückwärtsübersetzungsverhältnis definieren,
wobei jede Verzahnung ein erstes Zahnrad (2, 38), das von einer Primärwelle (PS) des Getriebes (1) gehalten ist, und ein zweites Zahnrad (3, 36) umfasst, das mit dem ersten Zahnrad gekoppelt ist, das von einer Sekundärwelle (SS) des Getriebes gehalten ist,
wobei die Primärwelle (PS) um eine erste Drehachse (XPS) drehbar ist und die Sekundärwelle (SS) um eine zweite Drehachse (XSS) parallel zur ersten Drehachse (XPS) drehbar ist,
wobei in wenigstens einer Verzahnung (I) der mehreren Verzahnungen:
das erste Zahnrad (2) dauerhaft drehfest mit der Primärwelle (PS) verbunden ist; und
das zweite Zahnrad (3) in Bezug auf die Sekundärwelle (SS) frei drehbar gelagert ist, wobei das zweite Zahnrad (3) drehfest mit einer zur Sekundärwelle (SS) koaxialen Umlaufeinheit (4) verbunden ist und die Umlaufeinheit (4) darüber hinaus mit einer Bereichswählvorrichtung (5) wirkungsmäßig verbunden ist,
wobei die Umlaufeinheit (4) umfasst:
- ein Sonnenrad (6), das koaxial zu dem zweiten Zahnrad (3) der Verzahnung (I) ist;
- ein Hohlrad (7), das koaxial zu dem zweiten Zahnrad (3) der Verzahnung (I) und mit diesem drehfest verbunden ist; und
- eine Planeteneinheit (8), die koaxial zu dem zweiten Zahnrad (3) der Verzahnung (I) ist und ein oder mehrere Planetenräder (10) umfasst, die von einem Planetenträger (12) gehalten sind;
wobei die Bereichswählvorrichtung (5) einen ersten Betriebszustand (22+), in dem das Sonnenrad (6) drehfest mit dem Hohlrad (7) verbunden ist, und einen zweiten Betriebszustand (22-) umfasst, in dem die Drehung des Sonnenrades (6) blockiert ist, und
die Verzahnung (I) darüber hinaus mit einer Eingriffsvorrichtung (S1/2) wirkungsmäßig in Verbindung steht, die dazu eingerichtet ist, den Planetenträger (12) wahlweise in Drehung mit der Sekundärwelle (SS) zu verbinden.

2. Getriebe (1) nach Anspruch 1, bei dem die Verzahnung eine Verzahnung für das erste Vorwärtsübersetzungsverhältnis (I) ist und das erste Zahnrad (2) sowie das zweite Zahnrad (3) über direktes Kämmen gekoppelt sind.

3. Getriebe (1) nach Anspruch 1 oder Anspruch 2, bei dem die Verzahnung eine Rückwärtsverzahnung ist, die ein drittes Zahnrad umfasst, das um eine dritte Drehachse parallel zu der ersten und der zweiten Drehachse (XPS, XSS) drehbar ist, wobei das erste und das zweite Zahnrad über Kämmen mit dem dritten Zahnrad gekoppelt sind.

4. Getriebe (1) nach einem der vorhergehenden Ansprüche, bei dem die Bereichswählvorrichtung (5) ein erstes Element (14), ein zweites Element (16) und ein drittes Element (18) umfasst,
wobei:
- das Sonnenrad (6) drehfest mit dem ersten Element (14) der Bereichswählvorrichtung (5) verbunden ist;
- das Hohlrad (7) drehfest mit dem zweiten Element (16) der Bereichswählvorrichtung (5) verbunden ist; und darüber hinaus
- das dritte Element (18) der Bereichswählvorrichtung (5) mit einem drehfesten Bauteil (20) verbunden ist.

5. Getriebe (1) nach Anspruch 4, bei dem die Bereichswählvorrichtung (5) ein bewegliches Element (22) aufweist, das zwischen einer ersten Betriebsposition (22+), in der eine Kopplung des ersten Elementes (14) und des zweiten Elementes (16) vorgesehen ist, und einer zweiten Betriebsposition (22-) verschoben werden kann, in der eine Kopplung des ersten Elements (14) und des dritten Elements (18) vorgesehen ist.

6. Getriebe (1) nach einem der vorhergehenden Ansprüche, bei dem:
- in dem ersten Betriebszustand der Bereichswählvorrichtung (5) das Sonnenrad (6) und das Hohlrad (7) drehfest miteinander verbunden sind und die Relativbewegung zwischen der Planeteneinheit (8), dem Sonnenrad (6) und dem Hohlrad (7) deaktiviert ist; und
- in dem zweiten Betriebszustand der Bereichswählvorrichtung (5) die Relativbewegung zwischen der Planeteneinheit (8), dem Sonnenrad und dem Hohlrad (6, 7) freigegeben ist.

7. Getriebe (1) nach einem der vorhergehenden Ansprüche, bei dem das Sonnenrad (6), das Hohlrad (7) und das eine oder die mehreren Planetenräder (10) zylindrische Zahnräder sind.

8. Getriebe (1) nach Anspruch 7, bei dem das Sonnenrad (6) ein zylindrisches Zahnrad mit einer Außenverzahnung ist, das Hohlrad (7) ein zylindrisches Zahnrad mit einer Innenverzahnung ist und das eine oder die mehreren Planetenräder (10) zylindrische Zahnräder mit Außenverzahnung sind.

9. Getriebe (1) nach einem der Ansprüche 4 bis 8, bei dem die Bereichswählvorrichtung (5) eine Synchronisiereinrichtung mit konischen Elementen ist, bei denen:
- das erste Element (14) der Bereichswählvorrichtung (5) eine Nabe der Synchronisiereinrichtung ist;
- das zweite Element (16) der Bereichswählvorrichtung (5) ein erster Synchronisationskegel ist, der mit dem Hohlrad (7) verbunden ist;
- das dritte Element (18) der Bereichswählvorrichtung (5) ein drehfester zweiter Synchronisationskegel ist; und
- das bewegliche Element (22) eine Hülse ist, die drehbar mit der Nabe (14) verbunden und in Bezug darauf axial beweglich ist.

10. Getriebe (1) nach Anspruch 9, bei dem ein erster Synchronring (SR1) zwischen der Nabe (14) und dem ersten Synchronisationskegel (16) angeordnet ist und ein zweiter Synchronring (SR2) zwischen der Nabe (14) und dem zweiten Synchronisationskegel (18) angeordnet ist.

11. Getriebe (1) nach einem der Ansprüche 4 bis 8, bei dem die Bereichswählvorrichtung (5) eine Eingriffsvorrichtung mit Frontzähnen ist, bei der:
- das zweite Element (16) und das dritte Element (18) der Bereichswählvorrichtung (5) als Kränze mit einem Ring von Frontzähnen vorgesehen sind; und
- das erste Element (14) der Bereichswählvorrichtung (5) drehbar mit dem Sonnenrad (6) verbunden und in Bezug darauf axial beweglich ist und weiterhin Frontzähne umfasst, die zum Eingriff mit den Frontzähnen von jeweils dem zweiten Element (16) und dem dritten Element (18) eingerichtet sind, wobei das erste Element (14) weiterhin das bewegliche Element der Bereichswählvorrichtung (5) bildet.

12. Getriebe (1) nach Anspruch 1, bei dem die Eingriffsvorrichtung (S1/2) eine Synchronisiereinrichtung mit konischen Elementen ist, umfassend:
- ein erstes Element (28), das eine Nabe der Synchronisationseinrichtung definiert;
- ein zweites Element (30), das einen ersten Synchronisationskegel definiert, der drehfest mit dem Planetenträger (12) verbunden ist;
- ein drittes Element (36), das einen zweiten Synchronisationskegel definiert, der drehfest mit dem zweiten Zahnrad (36) eines weiteren Vorwärtsübersetzungsverhältnisses, insbesondere eines zweiten Vorwärtsübersetzungsverhältnisses (II) verbunden ist; und
- ein bewegliches Element (34), das ein Hülsenelement umfasst, das drehbar mit der Nabe (28) verbunden und in Bezug auf diese axial beweglich ist.

13. Getriebe (1) nach Anspruch 12, bei dem ein erster Synchronring zwischen der Nabe (28) und dem ersten Synchronisationskegel (30) angeordnet ist und ein zweiter Synchronring zwischen der Nabe (28) und dem zweiten Synchronisationskegel (32) angeordnet ist.

## Revendications

1. Boîte de vitesses de véhicule automobile (1) comprenant une pluralité d'engrenages qui définissent des rapports de marche avant (I, II) correspondants et un rapport de marche arrière,
chaque engrenage comprenant une première roue dentée (2, 38) portée par un arbre primaire (PS) de la boîte de vitesses (1) et une deuxième roue dentée (3, 36), couplée à ladite première roue dentée, portée par un arbre secondaire (SS) de la boîte de vitesses,
l'arbre primaire (PS) pouvant tourner autour d'un premier axe de rotation (XPS), et l'arbre secondaire (SS) pouvant tourner autour d'un deuxième axe de rotation (XSS), parallèle au premier axe de rotation (XPS),
dans laquelle dans au moins un engrenage (I) de ladite pluralité d'engrenages :
la première roue dentée (2) est reliée en permanence en rotation à l'arbre primaire (PS) ; et
la deuxième roue dentée (3) est montée de manière à pouvoir tourner librement par rapport à l'arbre secondaire (SS), ladite deuxième roue dentée (3) étant reliée en rotation à une unité épicycloïdale (4) coaxiale à l'arbre secondaire (SS), ladite unité épicycloïdale (4) étant en outre reliée de manière fonctionnelle à un dispositif sélecteur de plage (5),
ladite unité épicycloïdale (4) comprenant :
- un planétaire (6), qui est coaxial à la deuxième roue dentée (3) de l'engrenage (I) ;
- une couronne (7), qui est coaxiale à la deuxième roue dentée (3) de l'engrenage (I) et est reliée en rotation à celle-ci ; et
- un train planétaire (8), qui est coaxial à la deuxième roue dentée (3) de l'engrenage (I) et comporte un ou plusieurs engrenages planétaires (10) portés par un porte-satellites (12) ;
dans laquelle le dispositif sélecteur de plage (5) comporte une première condition de fonctionnement (22+) dans laquelle ledit planétaire (6) est relié en rotation à ladite couronne (7), et une deuxième condition de fonctionnement (22-) dans laquelle la rotation dudit planétaire (6) est bloquée, et
dans laquelle l'engrenage (I) est en outre associé de manière fonctionnelle à un dispositif d'engagement (S1/2) configuré pour relier sélectivement en rotation ledit porte-satellites (12) à l'arbre secondaire (SS).

2. Boîte de vitesses (1) selon la revendication 1, dans laquelle ledit engrenage est un engrenage pour le premier rapport de marche avant (I), où la première roue dentée (2) et la deuxième roue dentée (3) sont couplées par engrènement direct.

3. Boîte de vitesses (1) selon la revendication 1 ou 2, dans laquelle ledit engrenage est un inverseur de marche comprenant une troisième roue dentée, qui peut tourner autour d'un troisième axe de rotation parallèle auxdits premier et deuxième axes de rotation (XPS, XSS), où les première et deuxième roues dentées sont couplées par engrènement à la troisième roue dentée.

4. Boîte de vitesses (1) selon l'une quelconque des revendications précédentes, dans laquelle ledit dispositif sélecteur de plage (5) comprend un premier élément (14), un deuxième élément (16) et un troisième élément (18),
où :
- ledit planétaire (6) est relié en rotation audit premier élément (14) du dispositif sélecteur de plage (5) ;
- ladite couronne (7) est reliée en rotation audit deuxième élément (16) du dispositif sélecteur de plage (5) ; et de plus
- le troisième élément (18) du dispositif sélecteur de plage (5) est relié à un composant (20) fixe en rotation.

5. Boîte de vitesses (1) selon la revendication 4, dans laquelle le dispositif sélecteur de plage (5) comprend un élément mobile (22), qui peut être déplacé entre une première position de fonctionnement (22+) dans laquelle un couplage dudit premier élément (14) et dudit deuxième élément (16) est fourni, et une deuxième position de fonctionnement (22-) dans laquelle un couplage dudit premier élément (14) et dudit troisième élément (18) est fourni.

6. Boîte de vitesses (1) selon l'une quelconque des revendications précédentes, dans laquelle :
- dans la première condition de fonctionnement du dispositif sélecteur de plage (5), le planétaire (6) et la couronne (7) sont reliés en rotation l'une à l'autre et le mouvement relatif entre ledit train planétaire (8) et ledit planétaire (6) et la couronne (7) est empêché ; et
- dans la deuxième condition de fonctionnement du dispositif sélecteur de plage (5), le mouvement relatif entre ledit train planétaire (8) et ledit planétaire et la couronne (6, 7) est autorisé.

7. Boîte de vitesses (1) selon l'une quelconque des revendications précédentes, dans laquelle le planétaire (6), la couronne (7) et le ou les plusieurs engrenages planétaires (10) sont des roues dentées cylindriques.

8. Boîte de vitesses (1) selon la revendication 7, dans laquelle le planétaire (6) est une roue dentée cylindrique ayant une denture extérieure, la couronne (7) est une roue dentée cylindrique ayant une denture intérieure, et le ou les plusieurs engrenages planétaires (10) sont des roues dentées cylindriques ayant une denture extérieure.

9. Boîte de vitesses (1) selon l'une quelconque des revendications 4 à 8, dans laquelle ledit dispositif sélecteur de plage (5) est un synchroniseur ayant des éléments coniques où :
- le premier élément (14) du dispositif sélecteur de plage (5) est un moyeu dudit synchroniseur ;
- le deuxième élément (16) du dispositif sélecteur de plage (5) est un premier cône de synchronisation relié à ladite couronne (7) ;
- le troisième élément (18) du dispositif sélecteur de plage (5) est un deuxième cône de synchronisation fixe en rotation ; et
- l'élément mobile (22) est un manchon relié en rotation audit moyeu (14) et mobile axialement par rapport à celui-ci.

10. Boîte de vitesses (1) selon la revendication 9, dans laquelle une première bague de synchroniseur (SR1) est agencée entre ledit moyeu (14) et ledit premier cône de synchronisation (16), et dans laquelle une deuxième bague de synchroniseur (SR2) est agencée entre ledit moyeu (14) et ledit deuxième cône de synchronisation (18).

11. Boîte de vitesses (1) selon l'une quelconque des revendications 4 à 8, dans laquelle ledit dispositif sélecteur de plage (5) est un dispositif d'engagement ayant des dents avant où :
- le deuxième élément (16) et le troisième élément (18) du dispositif sélecteur de plage (5) sont fournis sous forme de colliers ayant une bague de dents avant ; et
- le premier élément (14) du dispositif sélecteur de plage (5) est relié en rotation audit planétaire (6) et est mobile axialement par rapport à celui-ci, et comporte en outre des dents avant configurées pour s'engager, respectivement, avec les dents avant du deuxième élément (16) et du troisième élément (18), ledit premier élément (14) constituant en outre l'élément mobile du dispositif sélecteur de plage (5).

12. Boîte de vitesses (1) selon la revendication 1, dans laquelle ledit dispositif d'engagement (S1/2) est un synchroniseur ayant des éléments coniques, comportant :
- un premier élément (28) définissant un moyeu dudit synchroniseur ;
- un deuxième élément (30) définissant un premier cône de synchronisation relié en rotation audit porte-satellites (12) ;
- un troisième élément (36) définissant un deuxième cône de synchronisation relié en rotation à la deuxième roue dentée (36) d'un rapport de marche avant supplémentaire, en particulier un deuxième rapport de marche avant (II) ; et
- un élément mobile (34), comprenant un élément manchon relié en rotation audit moyeu (28) et mobile axialement par rapport à celui-ci.

13. Boîte de vitesses (1) selon la revendication 12, dans laquelle une première bague de synchroniseur est agencée entre ledit moyeu (28) et ledit premier cône de synchronisation (30), et dans laquelle une deuxième bague de synchroniseur est agencée entre ledit moyeu (28) et ledit deuxième cône de synchronisation (32).
